# EUROPÄISCHE PATENTSCHRIFT

(11) **EP 2 780 155 B1**
(45) Veröffentlichungstag und Bekanntmachung des Hinweises auf die Patenterteilung: **07.08.2019**
(21) Anmeldenummer: 12766399.5
(22) Anmeldetag: 13.09.2012
(51) Int. Cl.: B29C 70/34, B29C 70/46, B29B 11/16, B29C 53/04, B29L 31/44, B29L 22/00, B29K 105/06, B29C 70/06, B29K 105/00, B29C 45/00, B29C 51/00, B29K 101/12, B29C 51/20, B29C 51/30

(54) **VERFAHREN ZUR HERSTELLUNG EINES STRUKTURBAUTEILS, VORRICHTUNG ZUR DURCHFÜHRUNG DES VERFAHRENS UND STRUKTURBAUTEIL**
METHOD FOR PRODUCING A STRUCTURAL COMPONENT, DEVICE FOR CARRYING OUT THE METHOD AND STRUCTURAL COMPONENT
PROCÉDÉ DE FABRICATION D'UN ÉLÉMENT STRUCTUREL, DISPOSITIF PERMETTANT DE METTRE EN UVRE LE PROCÉDÉ ET ÉLÉMENT STRUCTUREL

(30) Priorität: 17.11.2011 DE 102011086601; 21.02.2012 DE 102012202620
(43) Veröffentlichungstag der Anmeldung: 24.09.2014
(73) Patentinhaber: Adient Luxembourg Holding S.à r.l., 1855 Luxembourg (LU)
(72) Erfinder: FLOCK, Dustin, 51069 Köln (DE); MEIER, Bernd, 57439 Attendorn (DE)
(74) Vertreter: Finger, Catrin
(86) Internationale Anmeldenummer: PCT/EP2012/067953
(87) Internationale Veröffentlichungsnummer: WO 2013/072091

(56) Entgegenhaltungen:
- EP-A1- 1 559 533
- DE-A1- 3 742 852
- US-A- 5 567 509
- US-A- 5 902 533
- US-A1- 2010 270 700

## Beschreibung

Die Erfindung betrifft ein Verfahren zur Herstellung eines Strukturbauteils gemäß dem Oberbegriff des Patentanspruchs 1. Weiterhin betrifft die Erfindung eine Vorrichtung zur Durchführung des Verfahrens gemäß dem Oberbegriff des Patentanspruchs 6.

Strukturbauteile aus Faserverbundstrukturen, auch Organobleche genannt, sind endlosfaserverstärkte Thermoplastplatten und im Stand der Technik beispielsweise zur Herstellung von Sitzlehnenrückwänden bekannt. Üblicherweise wird dazu ein Organoblech in einem entsprechenden Werkzeug umgeformt und anschließend mit Funktionselementen wie z. B. Kunststoffrippen versehen, welche vorzugsweise aufgespritzt werden.

Zur Herstellung von Strukturbauteilen in Form von Hohlkörpern, d. h. mit einem geschlossenen Profil, sind aus dem Stand der Technik verschiedene Verfahren bekannt. Insbesondere werden dabei das sogenannte Fit-Hybrid-Verfahren und das Twin-Sheet Verfahren eingesetzt.

Mittels des beispielsweise in Elvira Möller, Handbuch Konstruktionswerkstoffe, 2. Auflage, Carl Hanser Verlag 2014 beschriebenen Fit-Hybrid-Verfahrens sind das Umformen eines Organoblechs und ein gleichzeitiges Spritzgießen in einem Verarbeitungsschritt möglich. Üblicherweise werden die herzustellenden geschlossenen Profile nach Umformen des Organoblechs mittels eines nachträglichen Klebeprozesses realisiert.

Beim beispielsweise in John Florian, Practical Thermoforming: Principles and Applications, 2. Auflage, 1996 Decker Inc, beschriebenen Twin-Sheet-Verfahren, auch als Doppelstreckzieh-Verfahren oder Twinsheet Thermoformverfahren bekannt, werden zwei Halbzeuge (z. B. Organobleche) umgeformt und gleichzeitig zu einem einzigen Strukturbauteil mit Hohlkörperprofil verschweißt. Beispielsweise werden die zwei Halbzeuge in einem Spannrahmen übereinander eingespannt und anschließend einseitig aufgeheizt, wobei diese mittels eines doppelseitigen Werkzeugs thermogeformt und gleichzeitig am Umfang verschweißt werden. Alternativ werden die Halbzeuge in zwei getrennten Spannrahmen aufgeheizt und in zwei gegenüberliegenden Werkzeughälften thermogeformt. Durch Zusammenfahren des Werkzeugs erfolgt anschließend ein Verschweißen der thermogeformten Halbzeuge.

Das Dokument US 2010/0270700 A1 offenbart ein Werkzeug zur Herstellung von Stanzteilen aus einem Zuschnittteil aus thermoplastischem Material. Das Werkzeug umfasst eine Matrize, welche von einem Boden, Seitenwänden und einer dem Boden gegenüber liegenden Öffnung begrenzt wird, sowie eine erhöhte, für das Zusammenwirken mit der Matrize durch deren Öffnung vorgesehene Stanze. Das Werkzeug umfasst mindestens ein bewegliches Teil, welches in mindestens eine Aussparung im Boden und/oder einer Seitenwand der Matrize geführt werden kann. Die Aussparung ermöglicht die Durchführung eines Bereiches des Zuschnittteils, der mittels des beweglichen Elements biegbar ist.

Das Dokument US 5 567 509 beschreibt ein Verfahren zur Herstellung von Stanzteilen durch Zusammenpressen von ebenen, aus heiß verformbaren Textilfasern zusammengesetzten Textilien. Die Stanzteile werden durch Anordnung der ebenen zusammengesetzten Textilien zwischen einem Formkörper und einem komplementären Gegenformkörper erzeugt, wobei überstehende Bereiche zugeschnitten und auf den komplementären Gegenformkörper gefaltet werden und einem thermischen Vorformung unterzogen werden.

Das Dokument DE 37 42 852 A1 offenbart die Verwendung flexibler Halbzeuge, welche aus einem oder mehreren mit einem thermoplastischen Kunststoff getränkten oder laminierten textilen Flächengebilde(n) bestehen, zur Herstellung von Hohlkörpern, insbesondere Rohren für die Be- und Entlüftung von Fahrgastzellen. Die Halbzeuge werden dabei rohrartig verwölbt und die Halbzeugränder überlappend oder nach ihrer Abkantung miteinander verbunden. Als textile Flächengebilde kommen vorzugsweise Gewebe, Matten, Vliese oder Gelege, die mit aromatischen Polyethern oder Polythioethern laminiert sind, in Betracht.

Aufgabe der vorliegenden Erfindung ist es, ein gegenüber dem Stand der Technik verbessertes und insbesondere kostengünstigeres Verfahren zur Herstellung eines Strukturbauteils mit einem mindestens abschnittsweise geschlossenen Hohlprofil anzugeben. Weiterhin ist es Aufgabe der vorliegenden Erfindung, eine gegenüber dem Stand der Technik verbesserte Vorrichtung zur Durchführung des Verfahrens anzugeben. Weiterhin ist es Aufgabe der vorliegenden Erfindung, eine Vorrichtung und ein Verfahren anzugeben, mit der beziehungsweise mit dem die Ausformung eines geschlossenen Hohlprofils mittels eines einzigen Werkzeugs möglich ist.

Die Aufgabe wird erfindungsgemäß hinsichtlich des Verfahrens durch die in Anspruch 1, hinsichtlich der Vorrichtung durch die in Anspruch 6 angegebenen Merkmale gelöst.

Vorteilhafte Ausgestaltungen der Erfindung sind Gegenstand der Unteransprüche.

Bei einem Verfahren zur Herstellung eines Strukturbauteils aus einem Organoblech ist erfindungsgemäß vorgesehen, dass das Organoblech in einem ersten Schritt vorerwärmt, in ein Werkzeug eingebracht und anschließend umgeformt wird, in einem zweiten Schritt ein Bereich des umgeformten Organoblechs erwärmt wird und in einem dritten Schritt zumindest der erwärmte Bereich des umgeformten Organoblechs derart weiter umgeformt wird, dass dieser mit einem weiteren Bereich des Organoblechs eine stoffschlüssige Verbindung unter Ausbildung eines zumindest abschnittsweise geschlossenen Hohlprofils eingeht.

Mittels des zumindest abschnittsweise geschlossenen Hohlprofils weist das Strukturbauteil in vorteilhafter Art und Weise eine erhöhte Torsionssteifigkeit auf. Damit ist das mittels des Verfahrens hergestellte Strukturbauteil gewichtsreduziert und besonders biegesteif. Beispielsweise ist das Strukturbauteil zur Herstellung einer Sitzlehnenrückwand für einen Fahrzeugsitz geeignet um diese vorteilhaft zu versteifen.

In einer bevorzugten Ausgestaltung der Erfindung wird das Organoblech während der Erwärmung des Bereichs mit einem thermoplastischen Werkstoff verstärkt. Auf diese Weise kann beispielsweise eine Rippenstruktur auf das Organoblech aufgebracht werden, welche vorzugsweise aus dem gleichen thermoplastischen Kunststoff wie das Organoblech gebildet ist.

Besonders bevorzugt wird dabei der thermoplastische Werkstoff stoffschlüssig auf eine Oberfläche des Organoblechs aufgebracht. Damit ist aus dem Organoblech und der theromplastischen Verstärkungsstruktur ein integriertes, somit einstückiges Strukturbauteil gebildet.

Vorzugsweise wird das Organoblech mittels des Umformens gemäß dem ersten Schritt in eine Teilform des Strukturbauteils und mittels des weiteren Umformens gemäß dem dritten Schritt in eine Endform des Strukturbauteils umgeformt.

In einer bevorzugten Ausgestaltung der Erfindung wird das Werkzeug zum Umformen gemäß dem ersten Schritt geschlossen und zum weiteren Umformen gemäß dem dritten Schritt geöffnet.

Bei einer Vorrichtung zur Durchführung eines Verfahrens zur Herstellung eines Strukturbauteils aus einem Organoblech mittels eines Werkzeugs ist dieses erfindungsgemäß als ein mindestens zweiteiliger, eine Kavität bildender Verbundkörper mit einem ersten Formkörper und einem zweiten Formkörper ausgebildet, wobei einer der Formkörper kavitätsseitig ein Umformprofil als Positivkontur aufweist, wobei zumindest einer der Formkörper wenigstens einen beheizbaren Abschnitt aufweist, und wobei das Werkzeug mit einem Schieber gekoppelt ist, welcher vorzugsweise entlang einer kavitätsseitigen Oberfläche eines der Körper bewegbar ist.

Mittels der Vorrichtung ist ein Strukturbauteil aus einem Organoblech mit einem geschlossenen Hohlprofil in wenigen Schritten mit nur einem Werkzeug herstellbar. Dazu sind in besonders vorteilhafter Weise keine weiteren Füge- und/oder Klebeprozesse notwendig.

Das Werkzeug ist in gewinnbringender Weise als ein Kombinationswerkzeug aus einem Umformwerkzeug und einem Spritzgusswerkzeug ausgebildet. Damit sind zwei verschiedene Prozesse in einem Werkzeug möglich, wodurch kurze Herstellungszeiten und Materialeinsparungen aufgrund einer geringen Anzahl von Werkzeugkomponenten möglich sind.

Das Organoblech des Strukturbauteils, welches nach dem bereits beschriebenen Verfahren hergestellt wird, weist ein geschlossenes Hohlprofil auf. Durch das geschlossene Profil weist das Strukturbauteil ein höheres biaxiales Flächenträgheitsmoment im Vergleich zu einem Strukturbauteil mit einem offenen Profil auf. Dadurch ist ein Träger schmaler gestaltbar, wodurch Material- und Gewichtseinsparungen erzielt werden. Mittels eines solchen Strukturbauteils kann eine Sitzrückenlehnwand mit einer sehr guten Steifigkeit preisgünstig hergestellt werden. Weiterhin sind mittels des geschlossenen Profils aufgespritzte Rippenstrukturen geschützt, so dass diese schmaler gestaltbar sind.

Anhand der beigefügten schematischen Figuren wird die Erfindung näher erläutert.

Dabei zeigen:
- Figur 1: schematisch eine Schnittdarstellung eines Werkzeuges während eines ersten Verfahrensschritts eines erfindungsgemäßen Verfahrens zur Herstellung eines Strukturbauteils,
- Figur 2: schematisch eine Schnittdarstellung des Werkzeugs gemäß Figur 1 in einem zweiten Verfahrensschritt,
- Figur 3: schematisch eine Schnittdarstellung des Werkzeugs gemäß Figur 1 in einem dritten Verfahrensschritt,
- Figur 4: schematisch eine Schnittdarstellung des Werkzeugs gemäß Figur 1 in einem vierten Verfahrensschritt,
- Figur 5: schematisch eine Schnittdarstellung des Werkzeugs gemäß Figur 1 in einem fünften Verfahrensschritt und
- Figur 6: schematisch eine Schnittdarstellung eines mittels der Verfahrensschritte gemäß den Figuren 1 bis 5 hergestellten Strukturbauteils.

Einander entsprechende Teile sind in allen Figuren mit den gleichen Bezugszeichen versehen.

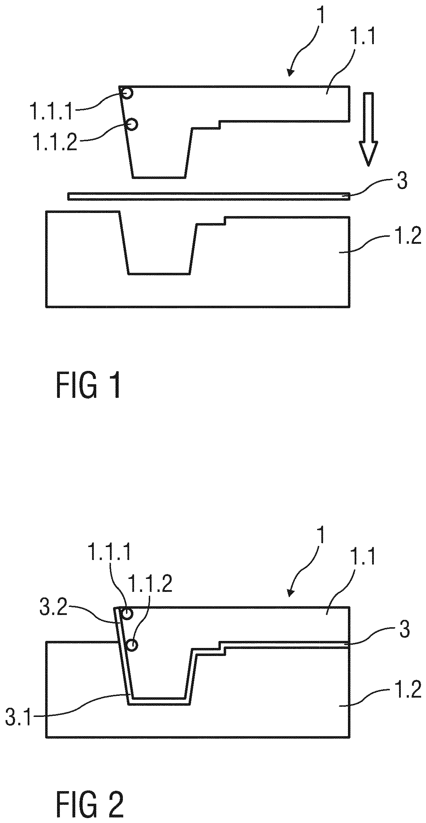

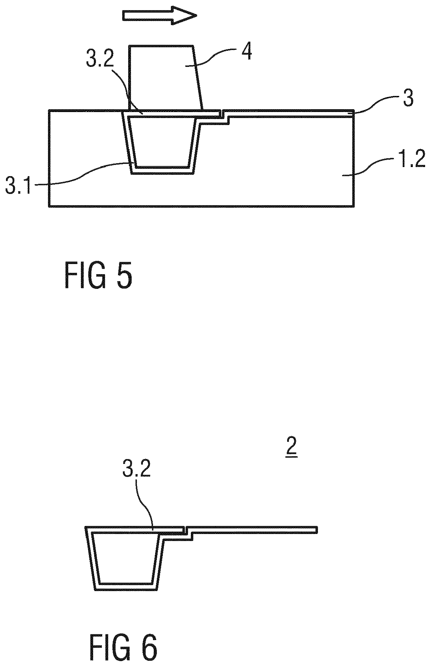

In Figur 1 ist schematisch eine Schnittdarstellung eines Werkzeuges 1 in einem ersten Verfahrensschritt eines erfindungsgemäßen Verfahrens zur Herstellung eines in Figur 6 gezeigten Strukturbauteils 2 dargestellt.

Das Strukturbauteil 2 ist aus einem sogenannten Organoblech 3 gebildet, welches im vorliegenden Ausführungsbeispiel ein herkömmliches Organoblech ist. Ein Organoblech 3 ist ein flächiges Halbzeug aus einem thermoplastischen Kunststoff, in welchem ein Gewebe aus Glas-, Carbon- und/oder Aramidfasern oder einer Mischform aus diesen derart eingebracht ist, dass die Fasern vollständig mit thermoplastischem Kunststoff benetzt sind. Organobleche 3 sind somit endlosfaserverstärkte Thermoplastplatten.

Zur entsprechenden Bearbeitung des Organoblechs 3 ist dieses zumindest partiell innerhalb des Werkzeugs 1 angeordnet.

Das Werkzeug 1 ist vorzugsweise ein Kombinationswerkzeug aus einem Umformwerkzeug und einem Spritzgusswerkzeug und als ein zweiteiliger, eine Kavität bildender Verbundkörper mit einem ersten Formkörper 1.1 und einem zweiten Formkörper 1.2 gebildet. Der erste Formkörper 1.1 ist dabei dem zweiten Formkörper 1.2 gegenüberliegend angeordnet. Im vorliegenden Ausführungsbeispiel gemäß Figur 1 ist das Werkzeug 1 geöffnet.

Der erste Formkörper 1.1 weist an seiner dem zweiten Formkörper 1.2 zugewandten Seite ein Umformprofil als Positivkontur des herzustellenden Profils des Organoblechs 3 auf.

Der zweite Formkörper 1.2 weist an seiner dem ersten Formkörper 1.1 zugewandten Seite eine Aussparung auf. Das Umformprofil des ersten Formkörpers 1.1 und die Aussparung des zweiten Formkörpers 1.2 bilden dabei die Kavität des Werkzeugs 1.

Sowohl der erste als auch der zweite Formkörper 1.1, 1.2 bestehen jeweils vorzugsweise aus einem Metall oder einer Metalllegierung oder einer Keramik oder einem Kunststoff. Auch ist es möglich, dass die Formkörper 1.1, 1.2 im Material unterschiedlich ausgebildet sind.

Wird als Material Keramik oder Kunststoff verwendet, so werden die Oberflächen des ersten und/oder zweiten Formkörpers 1.1, 1.2 zweckmäßigerweise mit einer Metallschicht versehen.

Im vorliegenden Ausführungsbeispiel weist der erste Formkörper 1.1 randseitig zwei beheizbare Abschnitte 1.1.1, 1.1.2 auf, welche einer partiellen Erwärmung des Organoblechs 3 dienen. Alternativ kann der erste Formkörper 1.1 auch einen oder mehr als zwei beheizbare Abschnitte 1.1.1, 1.1.2 aufweisen. Die beheizbaren Abschnitte 1.1.1, 1.1.2 können alternativ auch in anderen geeigneten Bereichen des ersten Formkörpers 1.1 angeordnet sein. Darüber hinaus ist es auch möglich, dass der zweite Formkörper 1.2 alternativ oder zusätzlich beheizbare Abschnitte 1.1.1, 1.1.2 aufweist.

Zum Umformen des Organoblechs 3 wird dieses zumindest bereichsweise vorerwärmt und zwischen beiden Formkörpern 1.1, 1.2 angeordnet. Das Organoblech 3 weist dabei Abmessungen auf, die im Vergleich zu den Abmessungen der Kavität des Werkzeugs 1 größer sind, so dass dieses bereichsweise außerhalb der Kavität des Werkzeugs 1 angeordnet ist.

Im Anschluss daran werden die Formkörper 1.1, 1.2 aufeinander zu bewegt, d. h. das Werkzeug 1 schließt sich und das Organoblech 3 wird entsprechend umgeformt, wie es in Figur 2 dargestellt ist. Dabei ist im Organoblech 3 eine Vertiefung 3.1 ausgeformt, deren Querschnitt ein annährend trapezförmiges Profil aufweist.

Ein Bereich 3.2 des Organoblechs 3 liegt dabei den beheizbaren Abschnitten 1.1.1, 1.1.2 des ersten Formkörpers 1.1 an, wobei eine Oberfläche des Bereichs 3.2 den beheizbaren Abschnitten 1.1.1, 1.1.2 zugewandt ist und eine andere Oberfläche des Bereichs 3.2 freiliegt.

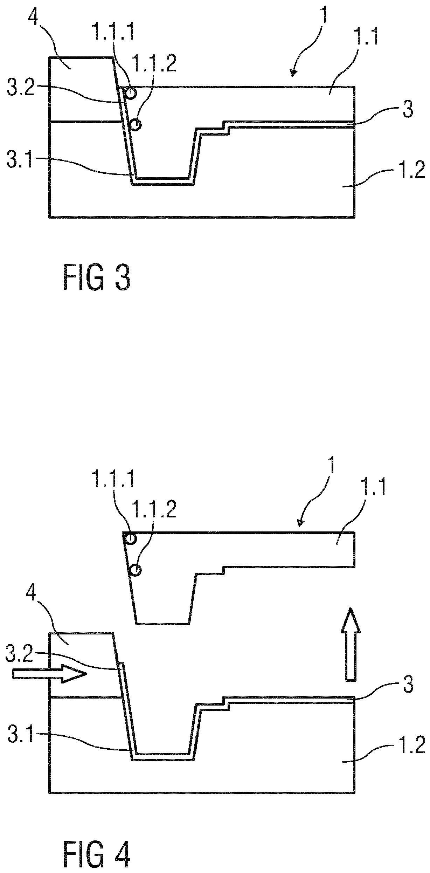

In einem in Figur 3 gezeigten, zum vorangegangenen Umformen alternativen oder zusätzlichen Verfahrensschritt wird in einem ersten Teilschritt ein Schieber 4 innerhalb des Werkzeugs 1 positioniert, wobei eine Oberfläche einer Seite des Schiebers 4 der freiliegenden Oberfläche des Bereichs 3.2 anliegt.

In einem zweiten Teilschritt wird das Organoblech 3 vorzugsweise mit einem Thermoplast umspritzt. Auf diese Weise wird eine Rippenstruktur (nicht dargestellt), welche besonders bevorzugt aus dem gleichen thermoplastischen Kunststoff wie das Organoblech 3 gebildet ist, auf eine Oberfläche des Organoblechs 3 aufgebracht, so dass aus Organoblech 3 und Rippenstruktur ein integriertes und somit einstückiges Bauteil gebildet ist.

Für ein weiteres Umformen des Organoblechs 3 wird während des Umspritzens des Organoblechs 3 mit der Rippenstruktur der Bereich 3.2 mittels der beheizbaren Abschnitte 1.1.1, 1.1.2 des ersten Körpers 1.1 erwärmt. Damit sind besonders kurze Zykluszeiten zur Herstellung des Strukturbauteils 2 möglich.

In einem in Figur 4 dargestellten, an die vorangegangene Umformung und/oder Hinterspritzung anschließenden Verfahrensschritt ist das Werkzeug 1 geöffnet, d. h. der erste Formkörper 1.1 ist von dem zweiten Formkörper 1.2 beabstandet. Im vorliegenden Ausführungsbeispiel wird der erste Formkörper 1.1 in Betrachtungsrichtung vertikal nach oben bewegt (mittels eines Pfeils dargestellt).

In Figur 5 wird der Schieber 4 anschließend in Betrachtungsrichtung horizontal nach rechts (mittels eines weiteren Pfeils gezeigt) bewegt. Dabei wird der erwärmte Bereich 3.2 umgeformt und geht mit einem weiteren Abschnitt des Organoblechs 3 eine insbesondere stoffschlüssige Verbindung unter Ausbildung eines geschlossenen Hohlprofils ein. Die Vertiefung 3.1 wird damit mittels des umgeformten Abschnitts 3.2 geschlossen. Mittels einer stoffschlüssigen Verbindung werden aufwändige und kostenintensive Klebeprozesse vermieden, so dass das erfindungsgemäße Verfahren damit besonders kosteneffizient ist.

In Figur 6 ist ein Querschnitt einer Seitenansicht des aus dem Organoblech 3 hergestellten Strukturbauteils 2 dargestellt.

Beispielsweise ist mittels des Strukturbauteils 2 eine Sitzlehnenrückwand eines Fahrzeugsitzes herstellbar, wobei in der eingespritzten Rippenstruktur Kopfstützenhülsen, Gurtumlenkung und/oder eine Aufnahme für eine Gurtaufrollvorrichtung ausgeformt sein können.

Das geschlossene Profil des Strukturbauteils 2 ermöglicht in besonders vorteilhafter Art und Weise eine erhöhte Torsionssteifigkeit, so dass beispielsweise die gesamte Sitzlehnenrückwand versteift werden kann.

### Bezugszeichenliste

- 1: Werkzeug
- 1.1: erster Formkörper
- 1.1.1, 1.1.2: beheizbare Abschnitte
- 1.2: zweiter Formkörper
- 2: Strukturbauteil
- 3: Organoblech
- 3.1: Vertiefung
- 3.2: Bereich
- 4: Schieber

## Patentansprüche

1. Verfahren zur Herstellung eines Strukturbauteils (2) aus einem Organoblech (3), wobei das Organoblech (3) in einem ersten Schritt vorerwärmt in ein Werkzeug (1) eingebracht und anschließend umgeformt wird,
**dadurch gekennzeichnet, dass**
- in einem zweiten Schritt ein Bereich (3.2) des umgeformten Organoblechs (3) erwärmt wird, und
- in einem dritten Schritt zumindest der erwärmte Bereich (3.2) des umgeformten Organoblechs (3) derart weiter umgeformt wird, dass dieser mit einem weiteren Bereich des Organoblechs (3) eine stoffschlüssige Verbindung unter Ausbildung eines zumindest abschnittsweise geschlossenen Hohlprofils eingeht.

2. Verfahren nach Anspruch 1,
**dadurch gekennzeichnet, dass** das Organoblech (3) während der Erwärmung des Bereichs (3.2) mit einem thermoplastischen Werkstoff verstärkt wird.

3. Verfahren nach Anspruch 2,
**dadurch gekennzeichnet, dass** der thermoplastische Werkstoff stoffschlüssig auf eine Oberfläche des Organoblechs (3) aufgebracht wird.

4. Verfahren nach einem der vorhergehenden Ansprüche,
**dadurch gekennzeichnet, dass** das Organoblech (3) mittels des Umformens gemäß dem ersten Schritt in eine Teilform des Strukturbauteils (2) und mittels des weiteren Umformens gemäß dem dritten Schritt in eine Endform des Strukturbauteils (2) umgeformt wird.

5. Verfahren nach einem der vorhergehenden Ansprüche,
**dadurch gekennzeichnet, dass** das Werkzeug (1) als ein mindestens zweiteiliger, eine Kavität bildender Verbundkörper mit einem ersten Formkörper (1.1) und einem zweiten Formkörper (1.2) ausgebildet ist und zum Umformen gemäß dem ersten Schritt durch Aufeinanderzubewegung der Formkörper (1.1, 1.2) geschlossen und zum weiteren Umformen gemäß dem dritten Schritt durch Beabstandung der Formkörper (1.1, 1.2) geöffnet wird.

6. Vorrichtung zur Durchführung eines Verfahrens nach den Ansprüchen 1 bis 5 mit einem Werkzeug (1), wobei das Werkzeug (1) als ein mindestens zweiteiliger, eine Kavität bildender Verbundkörper mit einem ersten Formkörper (1.1) und einem zweiten Formkörper (1.2) ausgebildet ist, wobei einer der Formkörper (1.1, 1.2) kavitätsseitig ein Umformprofil als Positivkontur aufweist und wobei das Werkzeug (1) mit einem Schieber (4) gekoppelt ist,
**dadurch gekennzeichnet, dass** zumindest einer der Formkörper (1.1, 1.2) wenigstens einen zur bereichsweisen Erwärmung des Organoblechs (3) vorgesehenen beheizbaren Abschnitt (1.1.1, 1.1.2) aufweist.

7. Vorrichtung nach Anspruch 6,
**dadurch gekennzeichnet, dass** der Schieber (4) entlang einer kavitätsseitigen Oberfläche eines der Formkörper (1.2) bewegbar ist.

8. Vorrichtung nach Anspruch 6 oder 7,
**dadurch gekennzeichnet, dass** das Werkzeug (1) als ein Kombinationswerkzeug aus einem Umformwerkzeug und einem Spritzgusswerkzeug ausgebildet ist.

## Claims

1. Method for producing a structural component (2) from an organic sheet (3), wherein in a first step the organic sheet (3) is preheated, introduced into a tool (1) and subsequently shaped, **characterized in that**
- in a second step a region (3.2) of the shaped organic sheet (3) is heated, and
- in a third step at least the heated region (3.2) of the shaped organic sheet (3) is shaped further such that said region enters into a material bond with a further region of the organic sheet (3) to form an at least partially closed hollow profile.

2. Method according to Claim 1, **characterized in that** the organic sheet (3) is reinforced by a thermoplastic material when the region (3.2) is heated.

3. Method according to Claim 2, **characterized in that** the thermoplastic material is applied by a material bond to a surface of the organic sheet (3).

4. Method according to one of the preceding claims, **characterized in that** by means of the shaping process the organic sheet (3) is shaped into a partial shape of the structural component (2) according to the first step and by means of the further shaping process the organic sheet is shaped into a final shape of the structural component (2) according to the third step.

5. Method according to one of the preceding claims, **characterized in that** the tool (1) is configured as an at least two-part composite body, forming a cavity, with a first mold body (1.1) and a second mold body (1.2), and for the shaping process the tool is closed according to the first step by moving the mold bodies (1.1, 1.2) toward one another and for the further shaping process the tool is opened according to the third step by spacing apart the mold bodies (1.1, 1.2).

6. Device for carrying out a method according to Claims 1 to 5, comprising a tool (1), wherein the tool (1) is configured as an at least two-part composite body, forming a cavity, with a first mold body (1.1) and a second mold body (1.2), wherein one of the mold bodies (1.1, 1.2) on the cavity side has a shaped profile as a positive contour, and wherein the tool (1) is coupled to a slide (4), **characterized in that** at least one of the mold bodies (1.1, 1.2) has at least one heatable portion (1.1.1, 1.1.2) which is provided for partial heating of the organic sheet (3).

7. Device according to Claim 6, **characterized in that** the slide (4) is able to be moved along a surface on the cavity side of one of the mold bodies (1.2).

8. Device according to Claim 6 or 7, **characterized in that** the tool (1) is configured as a combination tool consisting of a shaping tool and an injection-molding tool.

## Revendications

1. Procédé de fabrication d'un élément structurel (2) à partir d'une tôle organique (3), dans lequel on introduit dans un outil (1) la tôle organique (3) préchauffée dans une première étape et ensuite on la déforme, **caractérisé en ce que**
- dans une deuxième étape, on chauffe une région (3.2) de la tôle organique déformée (3), et
- dans une troisième étape, on déforme encore au moins la région chauffée (3.2) de la tôle organique déformée (3), de telle manière que celle-ci forme avec une autre région de la tôle organique (3) une liaison matérielle avec formation d'un profilé creux au moins localement fermé.

2. Procédé selon la revendication 1, **caractérisé en ce que** l'on renforce la tôle organique (3) avec un matériau thermoplastique pendant le chauffage de la région (3.2).

3. Procédé selon la revendication 2, **caractérisé en ce que** l'on dépose le matériau thermoplastique en liaison matérielle sur une surface de la tôle organique (3).

4. Procédé selon l'une quelconque des revendications précédentes, **caractérisé en ce que** l'on déforme la tôle organique (3) à une forme partielle de l'élément structurel (2) au moyen de la déformation selon la première étape et à une forme finale de l'élément structurel (2) au moyen de l'autre déformation selon la troisième étape.

5. Procédé selon l'une quelconque des revendications précédentes, **caractérisé en ce que** l'outil (1) est constitué par un corps composite en au moins deux parties, formant une cavité, avec un premier corps de forme (1.1) et un second corps de forme (1.2) et on le ferme par rapprochement des corps de forme (1.1, 1.2) pour la déformation selon la première étape et on l'ouvre par écartement des corps de forme (1.1, 1.2) pour l'autre déformation selon la troisième étape.

6. Dispositif pour la mise en oeuvre d'un procédé selon les revendications 1 à 5 avec un outil (1), dans lequel l'outil (1) est constitué par un corps composite en au moins deux parties, formant une cavité, avec un premier corps de forme (1.1) et un second corps de forme (1.2), dans lequel un des corps de forme (1.1, 1.2) présente côté cavité un profil de déformation en tant que contour positif et dans lequel l'outil (1) est couplé à un coulisseau (4), **caractérisé en ce qu'**au moins un des corps de forme (1.1, 1.2) présente au moins une partie chauffante (1.1.1, 1.1.2) prévue pour le chauffage local de la tôle organique (3).

7. Dispositif selon la revendication 6, **caractérisé en ce que** le coulisseau (4) est déplaçable le long d'une surface côté cavité d'un des corps de forme (1.2) .

8. Dispositif selon une revendication 6 ou 7, **caractérisé en ce que** l'outil (1) est formé par un outil combiné composé d'un outil de déformation et d'un outil de moulage par injection.
